(19) **Europäisches Patentamt**

**European Patent Office**

**Office européen des brevets**

(11) **EP 0 858 018 A1**

(12) **EUROPÄISCHE PATENTANMELDUNG**

(43) Veröffentlichungstag:
**12.08.1998 Patentblatt 1998/33**

(51) Int. Cl.⁶: **G05D 7/06**, G01F 1/50,
G01F 1/36, G01F 15/075

(21) Anmeldenummer: **98101769.2**

(22) Anmeldetag: **31.01.1998**

(84) Benannte Vertragsstaaten:
**AT BE CH DE DK ES FI FR GB GR IE IT LI LU MC NL PT SE**

(30) Priorität: **06.02.1997 CH 257/97**

(71) Anmelder:
**Georg Fischer Rohrleitungssysteme AG**
**CH-8201 Schaffhausen (CH)**

(72) Erfinder:
• **Schalk, Adalbert**
**79793 Wutöschingen (DE)**

• **Stumpp, Jurgen**
**79771 Kiettgau (DE)**
• **Mattes, Joachim**
**78532 Tuttlingen (DE)**

(74) Vertreter:
**Rottmann, Maximilian R. et al**
**c/o Rottmann, Zimmermann + Partner AG**
**Glattalstrasse 37**
**8052 Zürich (CH)**

(54) **Verfahren und Vorrichtung zur Durchflussregelung von Flüssigkeiten**

(57) Bei einem Durchflussregelventil mit in einem Durchflusskanal (27) angeordneten Verschlussteil (5) ist der zwischen Durchflusskanal und Verschlussteil gebildete Durchflussquerschnitt kontinuierlich verstellbar. Zu- und Ablauf des Durchflusskanals stehen mit einem Differenzdrucksensor (36) in Wirkverbindung. Zur Ermittlung des Stellwertes (y) für einen Stellantrieb (8) zur Einstellung einer vorgegebenen Durchflussmenge (Q) wird der sich zwischen Zu- und Ablauf des Durchflusskanals (27) einstellende Differenzdruck ( $\Delta p$ ) und der momentane Stellwert mit dem Kennlinienfeld $Q = f(y, \Delta p)$ des Ventils verglichen und der Stellantrieb (8) über einen Regler entsprechend betätigt.

**Fig.1**

## Beschreibung

Die Erfindung betrifft ein Verfahren zur Regelung des Durchflusses von Flüssigkeiten, insbesondere von Wasser und wasserähnlichen Medien, mittels eines Ventils mit einem Durchflusskanal und einem Verschlussteil zum kontinuierlichen Verstellen eines zwischen Durchflusskanal und Verschlussteil gebildeten Durchflussquerschnittes, wobei ein Teil des Durchflusskanals mit einem Stellantrieb verbunden ist und der Stellwert für den Stellantrieb zur Einstellung einer vorgegebenen Durchflussmenge durch Vergleich mit einem Sollwert ermittelt und der Stellantrieb über einen Regler entsprechend betätigt wird. Im Rahmen der Erfindung liegt auch ein zur Durchführung des Verfahrens geeignetes Durchflussregelventil.

Durchflussregler bekannter Bauart bestehen aus den Komponenten Durchflussmesser, Regler und Stellventil. Diese Komponenten sind innerhalb eines Rohrsystems getrennt voneinander angeordnet. Ueber den Regler wird ein Stellantrieb des Ventils zur Einstellung der gewünschten Durchflussmenge betätigt.

Bei einer bekannten Durchflussmessung nach dem Wirkdruckverfahren wird der Strömungsquerschnitt des Durchflusskanals beispielsweise durch den Einbau einer Lochblende verengt. Der sich vor der Blende einstellende Druck ist höher als der Druck hinter der Blende. Aus der Druckdifferenz lässt sich der Durchfluss bestimmen, wobei zwischen Druckdifferenz und Durchfluss eine quadratische Abhängigkeit besteht.

Die Bestimmung des Durchflusses in fluiddurchströmten Rohrsystemen ist auch heute noch immer nicht ganz unproblematisch. Eine universell einsetzbare und gleichzeitig preiswerte Messmethode gibt es nicht. Die breite Palette der Anforderungen wird durch verschiedene, speziell auf den Anwendungsfall abgestimmte Lösungen mehr oder weniger gut abgedeckt. Gerade grosse Messbereiche führen jedoch zu einem Zielkonflikt zwischen Installationsaufwand, Energieverlust und Genauigkeit.

Aus der WO-A-94/27069 ist ein Absperrventil bekannt, das auch als Durchflussregelventil eingesetzt werden kann, wobei die Durchflussöffnung zwischen Offen- und Schliessstellung des Verschlussteiles über einen Hubantrieb einstellbar ist. Hierzu ist das Ventil mit einem Wegmessgeber versehen, der die momentane Stellung des Verschlussteils einer Steuereinheit in einem Regelkreis übermittelt, wobei die gemessenen Werte mit Sollwerten verglichen werden und der Hubantrieb entsprechend verstellt wird. In der Praxis ist ein derartiges Durchflussregelventil kaum realisierbar, da zur genauen und reproduzierbaren Einstellung der gewünschten Durchflussmenge eine sehr grosse Datenmenge bereitgestellt und gespeichert werden müsste.

Der Erfindung liegt daher die Aufgabe zugrunde, ein Verfahren der eingangs genannten Art sowie ein zu dessen Durchführung geeignetes Durchflussregelventil bereitzustellen, die es ermöglichen, die Durchflussmenge über einen grossen Durchflussbereich mit hoher Genauigkeit reproduzierbar einzustellen. Zudem soll das Durchflussregelventil möglichst komplett innerhalb eines Gehäuses untergebracht werden können.

Bezüglich des Verfahrens wird die Aufgabe erfindungsgemäss dadurch gelöst, dass zur Ermittlung der Durchflussmenge der sich zwischen Zu- und Ablauf des Durchflusskanals einstellende Differenzdruck und der momentane Stellwert mit dem Kennlinienfeld $Q = f(y, \Delta p)$ des Ventils verglichen wird. Hierbei bedeuten $\Delta p$ den Differenzdruck, $y$ den Stellwert des Stellantriebs und $Q$ die Durchflussmenge.

Bevorzugt wird das Kennlinienfeld des Ventils in einem Mikrorechner gespeichert.

Bezüglich der Vorrichtung wird die erfindungsgemässe Aufgabe dadurch gelöst, dass der Zu- und Ablauf des Durchflusskanals mit einem Differenzdrucksensor in Wirkverbindung steht.

Bei einer bevorzugten Ausführungsform umfasst der Durchflusskanal einen rohrförmigen, in zwei zueinander beabstandeten Kolbenführungen gleitend und fluiddicht gelagerten Steuerkolben, der in Richtung der Rohrlängsachse gegen ein auf der Einlauf-Seite des Durchflusskanals angeordnetes Verschlussteil verschiebbar ist und mit diesem ein in seiner Oeffnungsstellung veränderbares Ventil bildet.

Der Steuerkolben ist zum kontinuierlichen Verschieben bevorzugt mit einem Schrittmotor und zur Bestimmung seiner momentanen Stellung im Durchflusskanal mit einem Wegaufnehmer wirkverbunden.

Zweckmässigerweise ist zur Steuerung der Kolbenstellung ein Mikrorechner mit in diesem gespeicherten Kennlinienfeld $Q = f(y, \Delta p)$ des Ventils vorgesehen.

Bevorzugt sind der Differenzdrucksensor, die Mess- und Steuerorgane und der Mikrorechner innerhalb eines Gehäuses angeordnet.

Bei dem vorstehend beschriebenen erfindungsgemässen Durchflussregelventil handelt es sich im Kern um ein Proportionalventil mit einem weggeregelten Steuerschieber, das ein streng reproduzierbares, monotones und hinreichend invariantes Kennlinienfeld aufweist. Die dem Durchflussregelventil zugrundeliegende Idee besteht darin, das Kennlinienfeld $Q = f(y, \Delta p)$ aufzunehmen und in einem integrierten Mikrorechner abzulegen. Hierbei bedeuten $\Delta p$ die Druckdifferenz, $y$ die Wegverschiebung des Steuerkolbens und $Q$ den Durchfluss.

Ueber einen mit dem Zu- und Abfluss des Ventils wirkverbundenen, hochdynamischen Differenzdrucksensor und das Schieberwegsignal wird nun der Arbeitspunkt des Ventils bestimmt, d.h. die Monotonie des Kennlinienfeldes ausgenutzt, um den aktuellen Durchflusswert zu bestimmen (Sensorfunktion). Gleichzeitig wird versucht, die Schieberstellung in einem überlagerten druckdifferenzgeführten Regelkreis so zu verstellen, dass der Differenzdruck $\Delta p$ und die Kolbenstellung $y$ mit den entsprechenden Werten aus dem abgespeicherten Kennlinienfeld übereinstimmen. Man nutzt somit den verbleibenden Freiheitsgrad des Ventils als "veränderliche Blende".

Das so bestimmte Durchflusssignal kann neben der eigentlichen Sensorfunktion als Sicherheitssignal eingesetzt werden, indem es z.B. bei einer technischen Anlage mit anderen Sensordaten verglichen wird und bei Auftreten eines Widerspruchs eine definierte Sicherheitsreaktion einleitet.

Das erfindungsgemässe Durchflussregelventil kann auch als Stellorgan zur Energieflussbeeinflussung bei Erkennen eines Störfalles eingesetzt werden, denn der Sensor ist im konstruktiven Sinn ein Widerstandsstellglied.

Das erfindungsgemässe Durchflussregelventil wird vorzugsweise für Rohrleitungssysteme aus Kunststoff, insbesondere auch für aggressive und korrosive Durchflussmedien verwendet, wobei mindestens die das Durchflussmedium berührenden Teile wie Gehäuse, Strömungskörper, Verschlussteil mit Kolben und die Anschlussteile aus Kunststoff wie z.B. aus Polyvinylchlorid, Polypropylen, Polybuten, Polyethylen, Polyvinylidenfluorid, Polyamid oder Polytetrafluorethylen hergestellt sind.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in

Fig. 1    einen Längsschnitt durch ein Durchflussregelventil;

Fig. 2    Kennlinien für verschiedene Ventilöffnungsstellungen.

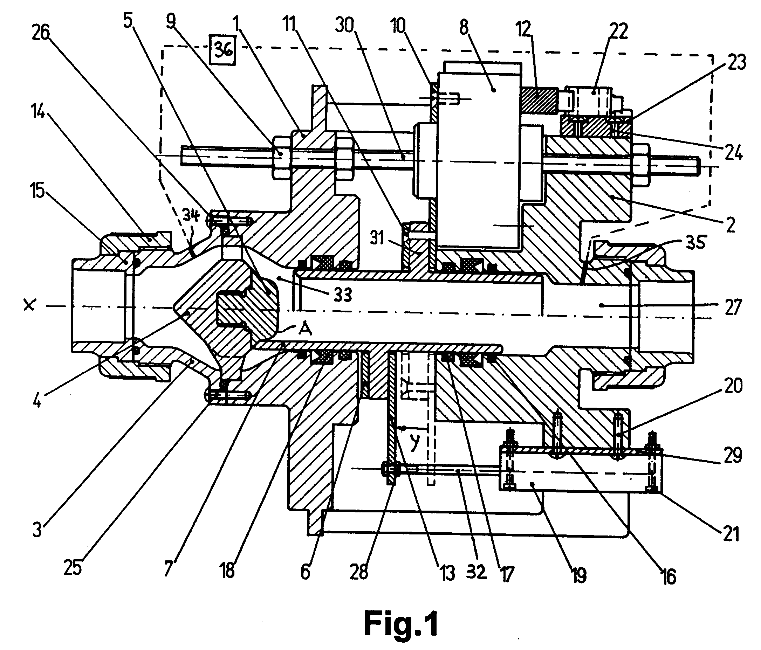

Eine in Fig. 1 dargestelltes Durchflussregelventil weist zwei miteinander verschraubte Kolbenführungen 1, 2 auf. Ein Einlaufteil 3 ist mit der Kolbenführung 1 über Schrauben 25 verbunden. Ein zwischen Kolbenführung 1 und Einlaufteil 3 eingesetzter Strömungsteiler 4 mit in diesem eingeschraubten Dichtungskörper 5 wird durch die Schraubverbindung mittig im Durchflussmesser fixiert. Nach aussen ist die Verbindung zwischen Kolbenführung 1 und Einlaufteil 3 über einen zwischengeordneten O-Ring 26 abgedichtet.

Das Einlaufteil 3 ist einlaufseitig mit einem aus Ueberwurfmutter 14 und Einlegteil 15 bestehenden Anschlussteil zum Anschliessen an eine in der Zeichnung nicht wiedergegebene Rohrleitung ausgestaltet.

Ein in die Kolbenführungen 1, 2 eingesetzter rohrförmiger Steuerkolben 7 bildet einen Teil eines Durchflusskanals 27, dessen Durchflussrichtung durch die Rohrlängsachse x definiert ist. Der Steuerkolben 7 ist in den Kolbenführungen 1, 2 gleitend geführt, wobei zur Verhinderung des Verklemmens PTFE-Stützringe 16 in die Kolbenführungen 1, 2 eingesetzt sind. Die fluiddichte Abdichtung zwischen dem Steuerkolben 7 und den Kolbenführungen 1, 2 erfolgt über zwischengeordnete O-Ringe 17. Zusätzlich wird der Steuerkolben 7 durch Abstreifer 18 vor möglichen Verunreinigungen geschützt.

Die Positionierung des Steuerkolbens 7 erfolgt über einen Schrittmotor 8, der zwischen den beiden Kolbenführungen 1, 2 durch Feststellen einer Laufspindel 30 mittels Konterung durch Muttern 9 fixiert ist.

Für die Kraftübertragung vom Schrittmotor 8 auf den Steuerkolben 7 ist ein mit dem Schrittmotor 8 verbundener Schieber 13 vorgesehen, der mit einem vom Steuerkolben 7 abragenden Flanschteil 31 über Schrauben 11 und einen Verstärkungsring 6 mit dem Schieber 13 verschraubt ist. Der Schieber 13 ist seinerseits über Schrauben 10 am Schrittmotor 8 befestigt.

Auf einer über Schrauben 24 an der Kolbenführung 2 angeordneten Grundplatte 23 ist ein Endschalter 22 befestigt, der mit einem am Schrittmotor 8 festgelegten Anschlag 12 zusammenwirkt.

Ein Wegaufnehmer 19, der zur momentanen Registrierung des Hubes y und damit der Kolbenstellung dient, ist mittels Schrauben 21 auf einer Grundplatte 29 montiert. Die Grundplatte 29 ist ihrerseits über Schrauben 20 an der Kolbenführung 2 festgelegt. Eine mit dem Wegaufnehmer 19 zusammenwirkende Schubstange 32 ist mit dem Schieber 13 durch Kontern von zwei Muttern 28 fest verbunden.

Der als Verschlussteil wirkende Dichtungskörper 5 bildet zusammen mit dem rohrförmigen Steuerkolben 7 ein in seiner Oeffnungsstellung veränderbares Ventil mit einer entsprechenden Veränderung der zwischen der Stirnseite des Steuerkolbens 7 und dem benachbarten Dichtungskörper 5 gebildeten Verengung 33 des Strömungsquerschnittes im Durchflusskanal 27.

Im Zu- und Ablauf des Durchflusskanals 27 sind Anschlussstellen 34, 35 für den Anschluss eines Differenzdrucksensors 36 vorgesehen. Ein integrierter Mikrorechner mit in diesem abgelegten Kennlinienfeld ist in der Zeichnung nicht dargestellt.

Die Aussenkontur A des Dichtungskörpers 5 ist so optimiert, dass in einem Durchflussbereich von 5 bis 95% des Hubes y die Funktion $Q = f(y)$ nahezu linear ist.

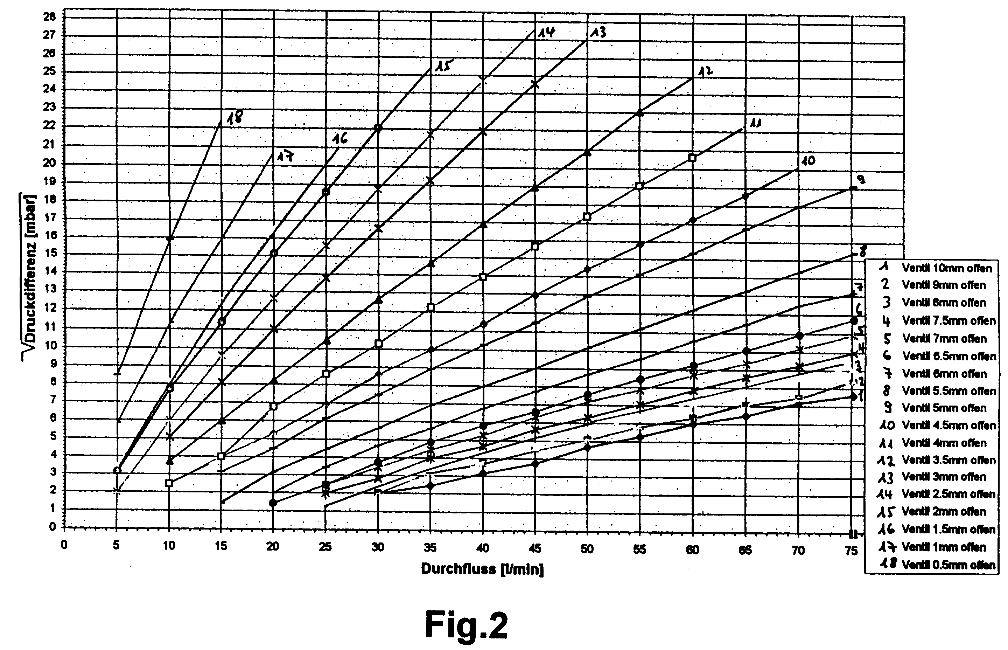

Fig. 2 zeigt Kennlinien für verschiedene Oeffnungsstellungen des Ventils bzw. des Steuerkolbens 7 als Kurvenschar $\sqrt{\Delta p} = f(Q,y)$. Die einzelnen Kurven sind über einen weiten Bereich linear und entsprechen demzufolge einem Ventil mit veränderlicher Blende. Diese Kennlinien werden in einem Mikrorechner gespeichert und dienen zur Festlegung der optimalen Stellung des Steuerkolbens 7.

**Patentansprüche**

1. Verfahren zur Regelung des Durcnflusses von Flüssigkeiten, insbesondere von Wasser und wasserähnlichen Medien, mittels eines Ventils mit einem Durchflusskanal (27) und einem Verschlussteil (5) zum kontinuierlichen Verstellen eines zwischen Durchflusskanal (27) und Verschlussteil (5) gebildeten Durchflussquerschnittes, wobei ein Teil (7) des Durchflusskanals (27) mit einem Stellantrieb (8) verbunden ist und der Stellwert (y) für den Stellantrieb (8) zur Einstellung einer vorgegebenen Durchflussmenge (Q) durch Vergleich mit einem Sollwert ermittelt und der Stellantrieb (8) über einen Regler entsprechend betätigt wird,
dadurch gekennzeichnet, dass
zur Ermittlung der Durchflussmenge (Q) der sich zwischen Zu- und Ablauf des Durchflusskanals (27) einstellende Differenzdruck ($\Delta$ p) und der momentane Stellwert (y) mit dem Kennlinienfenld $Q = f(y, \Delta p)$ des Ventils verglichen wird.

2.  Verfahren nach Anspruch 1, dadurch gekennzeichnet, dass das Kennlinienfeld des Ventils in einem Mikrorechner gespeichert wird.

3.  Durchflussregelventil zur Durchführung des Verfahrens nach Anspruch 1 oder 2, mit in einem Durchflusskanal (27) angeordneten Verschlussteil (5), wobei der zwischen Durchflusskanal und Verschlussteil gebildete Durchflussquerschnitt kontinuierlich verstellbar ist, dadurch gekennzeichnet, dass der Zu- und Ablauf des Durchflusskanals mit einem Differenzdrucksensor (36) in Wirkverbindung steht.

4.  Durchflussregelventil nach Anspruch 3, dadurch gekennzeichnet, dass der Durchflusskanal (27) einen rohrförmigen, in zwei zueinander beabstandeten Kolbenführungen (1, 2) gleitend und fluiddicht gelagerten Steuerkolben (7) umfasst, der in Richtung der Rohrlängsachse (x) gegen ein auf der Einlaufseite des Durchflusskanals angeordnetes Verschlussteil (5) verschiebbar ist und mit diesem ein in seiner Oeffnungsstellung veränderbares Ventil bildet.

5.  Durchflussregelventil nach Anspruch 4, dadurch gekennzeichnet, dass der Steuerkolben (7) zum kontinuierlichen Verschieben mit einem Schrittmotor (8) wirkverbunden ist.

6.  Durchflussregelventil nach Anspruch 4 oder 5, dadurch gekennzeichnet, dass der Steuerkolben (7) zur Bestimmung seiner momentanen Stellung mit einem Wegaufnehmer (19) wirkverbunden ist.

7.  Durchflussregelventil nach einem der Ansprüche 3 bis 6, dadurch gekennzeichnet, dass zur Steuerung der Kolbenstellung ein Mikrorechner mit in diesem gespeicherten Kennlinienfeld $Q = f(y, \Delta p)$ des Ventils vorgesehen ist.

8.  Durchflussregelventil nach einem der Ansprüche 3 bis 7, dadurch gekennzeichnet, dass der Differenzdrucksensor (36), die Mess- und Steuerorgane (7, 8, 9) und der Mikrorechner innerhalb eines Gehäuses angeordnet sind.

Fig.1

**Fig.2**

EP 0 858 018 A1

EP 0 858 018 A1

## EUROPÄISCHER RECHERCHENBERICHT

**Europäisches Patentamt**

**Nummer der Anmeldung**
EP 98 10 1769

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 540 079 A (NUOVOPIGNONE INDUSTRIE MECCANICHE E FONDERIA S.P.A.) 5.Mai 1993 <br> * das ganze Dokument * <br> --- | 1-3 | G05D7/06 <br> G01F1/50 <br> G01F1/36 <br> G01F15/075 |
| X | GB 2 123 983 A (DELTA TECHNICAL SERVICES LTD) 8.Februar 1984 <br> * Seite 2, Zeile 74 - Seite 3, Zeile 79; Abbildungen 1-6 * <br> --- | 1-3,6,7 | |
| X | US 4 763 681 A (CUNY ET AL.) 16.August 1988 <br> * Zusammenfassung * <br> * Spalte 2, Zeile 37 - Spalte 4, Zeile 11 * <br> * Spalte 4, Zeile 25-65 * <br> * Spalte 5, Zeile 56 - Spalte 6, Zeile 33; Abbildungen 1,4 * <br> --- | 1-3,6 | |
| X | EP 0 462 432 A (VALTEK INCORPORATED) 27.Dezember 1991 <br> * Zusammenfassung * <br> * Spalte 8, Zeile 55 - Spalte 10, Zeile 50; Ansprüche 1,2,4,6-12; Abbildungen 1,2,5,6 * <br> --- | 1-3,6-8 | |
| X | US 4 277 832 A (WONG) 7.Juli 1981 <br> * Spalte 1, Zeile 30 - Spalte 2, Zeile 2 * <br> * Spalte 2, Zeile 58 - Spalte 5, Zeile 27; Abbildung 1 * <br> --- | 1-3,6,7 | |
| X | FR 2 609 519 A (HERION-WERKE KG.) 15.Juli 1988 <br> * Zusammenfassung * <br> * Seite 2, Zeile 30 - Seite 4, Zeile 26; Abbildungen 1,2 * <br> --- <br> -/-- | 1-3,6-8 | |

| | |
|---|---|
| | **RECHERCHIERTE SACHGEBIETE (Int.Cl.6)** |
| | G05D <br> G01F <br> F16K |

Der vorliegende Recherchenbericht wurde für alle Patentansprüche erstellt

| Recherchenort | Abschlußdatum der Recherche | Prüfer |
|---|---|---|
| BERLIN | 22.Mai 1998 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

7

**Europäisches Patentamt**

# EUROPÄISCHER RECHERCHENBERICHT

Nummer der Anmeldung

EP 98 10 1769

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | WO 94 27069 A (GEORG FISCHER ROHRLEITUNGSSYSTEME AG) 24.November 1994 * Seite 2, Zeile 13 - Seite 4, Zeile 22 * * Seite 5, Zeile 23 - Seite 6, Zeile 6; Abbildung 1 *<br>--- | 4 | |
| A | US 3 784 156 A (PAETZEL ET AL.) 8.Januar 1974 * Zusammenfassung * * Spalte 3, Zeile 61 - Spalte 4, Zeile 16; Abbildung 1 *<br>--- | 4 | |
| A | US 4 723 754 A (TORIMOTO ET AL.) 9.Februar 1988 * Spalte 2, Zeile 21 - Spalte 3, Zeile 10; Abbildungen 1,2 *<br>----- | 5 | |

**RECHERCHIERTE SACHGEBIETE (Int.Cl.6)**

Der vorliegende Recherchenbericht wurde für alle Patentansprüche erstellt

| Recherchenort | Abschlußdatum der Recherche | Prüfer |
|---|---|---|
| BERLIN | 22.Mai 1998 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)